# EUROPÄISCHE PATENTANMELDUNG

(11) **EP 2 025 928 A2**
(43) Veröffentlichungstag der Anmeldung: **18.02.2009**
(21) Anmeldenummer: 08013304.4
(22) Anmeldetag: 24.07.2008
(51) Int. Cl.: F03D 1/06, F03D 3/06

(54) **Rotorblatt für Windkraftanlagen**

(30) Priorität: 02.08.2007 DE 102007036536
(71) Anmelder: EADS Deutschland GmbH, 85521 Ottobrunn (DE)
(72) Erfinder: Krause, Roland, 78351 Bodman-Ludwigshafen (DE); Fritzsche Martin, Dr., 88400 Biberach (DE)
(74) Vertreter: Meel, Thomas

(57) **Zusammenfassung**

Die Erfindung betrifft die Bauweise von Rotorblättern von Windkraftanlagen, deren äußere Form durch erhöhten Innendruck aufrechterhalten wird. Gemäß der Erfindung sind zumindest Saug- und Druckseite der Rotorblätter durch biegesteife Begrenzungsplatten (2,3) gebildet.

## Beschreibung

Die Erfindung betrifft die Bauweise von Rotorblättern von Windkraftanlagen nach dem Oberbegriff des Patentanspruch 1.

Aus der US 6,16,402 B2 ist eine Serpentinen-Windkraftanlage mit pneumatischen Rotorblättern bekannt. Die luftgefüllten Rotorblätter dienen in der dort dargestellten Anlage gleichzeitig als Auftriebskörper. Konstruktive Einzelheiten der Ausbildung der Rotorblätter sind nicht angegeben. Es ist jedoch aus den Zeichnungen zu erkennen, dass die einzelnen Rotorblätter aus einem Tuch gebildet sind. Unter einem Tuch wird in der vorliegenden Patentanmeldung jede Art von luftdichter, flexibler (d.h. keine Eigenstabilität, keine Biegesteifigkeit, unter Druck beliebig formbar) Folie verstanden.

Bei Windkraftanlagen für mobile, häufig den Standort wechselnde Verbraucher, wie z.B. mobile Arbeitsräume, Container und Zelte, in militärischen und zivilen Anwendungsbereichen sind Transportgewicht, Packvolumen und Inbetriebna-h-mezeit von entscheidender Bedeutung. Der Leistungsbereich ist bezogen auf die heute handelsüblichen MW-Anlagen hier sehr begrenzt; dies nicht nur infolge des für die Versorgung der elektrischen Geräte und der Klimatisierung einzelner oder mehrerer Räume bescheidenen Leistungsbedarfs, sondern auch wegen der Grenzen der geometrischen Abmessungen bei der Verlastung auf LKWs, in Containern oder in Frachtflugzeugen. Die Nutzung des lokalen Windenergieangebots erfolgt in Ergänzung zur Diesel-elektrischen Stromversorgung, die zur festen Ausrüstung der Arbeitsräume gehört.

Die der Erfindung zugrunde liegende Aufgabe besteht darin, eine Bauweise der Rotorblätter zu schaffen, die sich - unter voller Beherrschung der im Betrieb typischerweise auftretenden erheblichen Biege-, Flieh- und Torsionskräfte - durch geringes Transportgewicht und geringes Packvolumen auszeichnet.

Diese Aufgabe wird mit dem Gegenstand des Patentanspruchs 1 gelöst. Vorteilhafte Ausführungen sind Gegenstand von Unteransprüchen.

Die erfindungsgemäße Bauweise ist für Windkraftanlagen mit horizontaler und vertikaler Drehachse geeignet.

In der erfindungsgemäßen Bauweise können sowohl symmetrische als auch asymmetrische Profile hergestellt werden, wobei auch komplex geformte Profile möglich sind.

Die erfindungsgemäßen Rotorblätter zeichnen sich durch geringes Gewicht und geringes Packvolumen bei guter Steifigkeit des Rotorblatts und guten aerodynámischen Eigenschaften aus.

Beim dem erfindungsgemäßen Rotorblatt, bei dem der Innenraum ganz oder teilweise auf erhöhtem Innendruck gehalten wird, sind zumindest die Saugseite und die Druckseite des Rotorblattprofils aus biegesteifen Platten gebildet (im Folgenden als Begrenzungsplatten bezeichnet). Unter der Wirkung des Innendrucks ergibt sich ein stetiger Krümmungsverlauf der Begrenzungsplatten. Man erhält eine glatte, steife Rotoroberfläche mit guten aerodynamischen Eigenschaften, die derjenigen der bekannten aufblasbaren Rotorblätter aus Tuch überlegen ist.

Hinsichtlich der Stapelbarkeit sind solche Begrenzungsplatten optimal, die nach Druckentlastung eine ebene Form einnehmen. Jedoch können die Begrenzungsplatten zur Erzielung eines speziellen Profils auch ohne Druckbeaufschlagung bereits eine vorgegebene Krümmung aufweisen.

Der erhöhte Innendruck kann im gesamten Innenraum des Rotorblatts vorhanden sein. An der Blattnase kann dazu ein druckbeaufschlagtes Tuch (z.B. ein Gewebetuch) den inneren Druckraum verschließen. Das Blattprofil wird in diesem Fall von den beiden Begrenzungsplatten auf der Saugseite und der Druckseite des Rotorblatts zusammen mit dem Tuch an der Blattnase gebildet. Anstatt das Tuch lediglich an der Blattnase anzubringen, kann es in einer weiteren Ausführung das gesamte Blattprofil einschließlich der Begrenzungsplatten umhüllen.

Für asymmetrische und verwundene Blätter, gleich ob rechteckige oder trapezförmige Formen, mit teilweise konkaver Druckseite und gekrümmter Skelettlinie wird zur pneumatischen Formgebung eine tragende innere Stützstruktur eingebracht. Sie besteht vorteilhaft aus einer Platte, die über Abstandhalter mit den Begrenzungsplatten verbunden ist. Diese Platte kann eine ebene als auch - abhängig von der gewünschten Profilform - eine gekrümmte Form aufweisen. Die Stützstruktur nimmt die aerodynamischen und mechanischen Kräfte während des Betriebs auf.

Die Abstandshalter können z.B. als zugfeste Fäden oder Tuchstreifen, z.B. aus Gewebe, ausgebildet sein. Die Streifen verlaufen vorteilhaft in Blattlängsrichtung. Die Abstandshalter werden bevorzugt paarweise, beidseits der eingelegten Platte angeordnet.

In einer besonders vorteilhaften Ausführung werden eine oder mehrere der Abstandshalter, z.B. im Nasen- oder Mittelbereich, elastisch ausgebildet. Der Abstandshalter kann z.B. in Form einer Spiralfeder ausgebildet sein. Dadurch ist es möglich, die Profilform zwecks Beeinflussung der aerodynamischen Eigenschaften druckgesteuert zu verändern. Somit kann mittels Änderung der aerodynamischen Profilcharakteristik die Rotorleistung sowohl der herrschenden Windgeschwindigkeit als auch dem momentanen Leistungsbedarf angepasst werden kann.

Im Falle nur schwach belasteter symmetrischer Profile kann die tragende Platte im Innern des Blattes entfallen. Die Abstandhalter verbinden in diesem Falle unmittelbar die beiden Begrenzungsplatten. Diese Bauweise genügt den Anforderungen der Schnellläufer mit senkrechter Drehachse, Typ H-Darrius-Rotor. Gekrümmte Blätter in der Form der Troposkiene (Kettenlinie unter Fliehkraftbelastung) konstanter oder in Richtung größtem Rotordurchmesser zunehmender Profiltiefe erfordern einen entsprechenden Zuschnitt des Tuches, um unter Druck in gebogener Form auch auf der Innenseite glatte Oberflächen zu gewährleisten.

Der innere stabilisierende Überdruck muss jedoch nicht über den gesamten Profilquerschnitt aufgebracht und gehalten werden. In einer weiteren Ausführung ist der erhöhte Innendruck vielmehr nur in einem oder mehreren aufblasbaren Körpern, die sich im Innern des Rotorblatts befinden, vorhanden. Diese können z.B. einen kreisförmigen Querschnitt aufweisen. Diese Ausführung eignet sich insbesondere für symmetrische Profile. Zum Beispiel kann ein schlauchförmiger, aufblasbarer Körper im Nasenbereich vorhanden sein. Zur Erzeugung des Profils muss lediglich der Innendruck des Schlauchs erhöht werden. In einer weiteren Ausführung kann durch Einsatz mehrerer Schläuche innerhalb des Rotorblatts die Krümmung der Begrenzungskörper gezielt eingestellt werden.

Drehmoment, Flieh- und Torsionskraft des Blattes werden dadurch in die Rotornabe eingeleitet, dass die tragende Platte der Stützstruktur aus dem profilierten Bereich herausragt, um mit der Nabe kraftschlüssig verbunden zu werden. Bei Blättern ohne tragende Mittelplatte werden die Kräfte direkt von den Begrenzungsplatten an die Nabe übertragen. Beim Rotor mit senkrechter Drehachse werden die Blätter an beiden Enden an den Speichen des rotierenden Masts, bzw. direkt an diesem befestigt. Am gegenüberliegenden Blattende, also an der Blattspitze, kann eine als Randbogen ausgebildete Deckplatte oder auch ein druckbeaufschlagtes Tuch den inneren Druckraum verschließen.

Der Mindestwert des inneren Überdrucks muss zur Erhaltung der aerodynamischen Profilform mit einer hinreichenden Sicherheitszugabe (geringe Leckagen während der Betriebsdauer lassen sich kaum ausschließen) den Staudruck an der Profilnase überschreiten. Größere Werte erhöhen die Umfangs- und Längsspannung des Tuches und verbessern die Biegesteifigkeit des Blattes weit mehr als die Fliehkraft. Der Innendruck steigert auch die Torsionssteifigkeit, weil sich diese Spannungen den statisch wirkenden des Innendrucks überlagern.

Den Überdruck in die verschiedenen Luftkammern einzubringen ist ein Arbeitsschritt der Montage der Rotorblätter und des Anlagenaufbaus. Die gesteuerte automatische Druckluftversorgung, die auch im rotierenden System angeordnet sein kann, ist zwar für lange Standzeiten vorteilhaft und regelungstechnisch attraktiv, aber konstruktiv im vorliegenden Leistungsbereich recht aufwändig.

Der Turmkopf der Anlage mit horizontaler Drehachse, bestehend aus Rotorlagerung, Drehzahlübersetzung, Generator und Turmdrehlager, wird als kompakte Baueinheit auf den Mast gesetzt. Als Windfahne genügt eine Stoffbespannung zwischen 2 Stangen. Der Mast kann vorzugsweise aus 2 oder mehreren Abschnitten transportfähiger Länge zusammengesetzt werden. Bei kurzzeitigen Einsätzen an wechselnden Standorten verkürzt sich die Aufbauzeit, wenn der Mast anstelle eines zusätzliches Baumaterial erfordernden Erdfundaments an zwei übereinander liegenden ISO-Ecken eines Containers befestigt wird, in dem sich die zu versorgenden Arbeitsräume befinden. Dabei ist zwischen unterer Ecke und Mast vorteilhafterweise ein Gelenk vorhanden, das das Hochklappen ermöglicht. An der oberen Container-Ecke ist eine Verriegelung vorhanden, die den Mast festhält. Das Eigengewicht des Containers, auch ohne Ausrüstung, hält in ausreichendem Maße dem Kippmoment des Rotorschubs aus allen Windrichtungen das Gleichgewicht.

Ebenso wie bei Anlagen mit vertikaler Drehachse, die keine Windnachführung benötigen und die kompakte Baueinheit von Lagerung, Getriebe und Generator auf dem Dach des Containers zu befestigen gestatten, ist eine solche Dimensionierung der mechanischen Bauteile hinsichtlich deren Eigengewicht von Vorteil, dass deren wesentliche Eigenfrequenzen unterhalb der Anregung durch die Drehfrequenz des Rotors liegen (überkritische Bauweise).

Die Erfindung wird anhand konkreter beispielhafter Ausführungsformen unter Bezugnahme auf Fig. näher erläutert. Es zeigen:
- Fig. 1: den Schnitt eines unsymmetrischen Profils,
- Fig. 2: den Schnitt eines symmetrischen Profils mit zwei Druckkammern,
- Fig. 3a,3b: konstruktive Varianten zur Profilveränderung durch Änderung des Innendrucks,
- Fig. 4: den Längsschnitt durch ein Blatt mit tragender Skelettstruktur, Rand- bogen und Befestigungsansatz zur Rotornabe,
- Fig. 5: einen Teilschnitt eines Blatts in Längsrichtung ohne Skelettstruktur mit Befestigungsansatz zur Rotornabe.

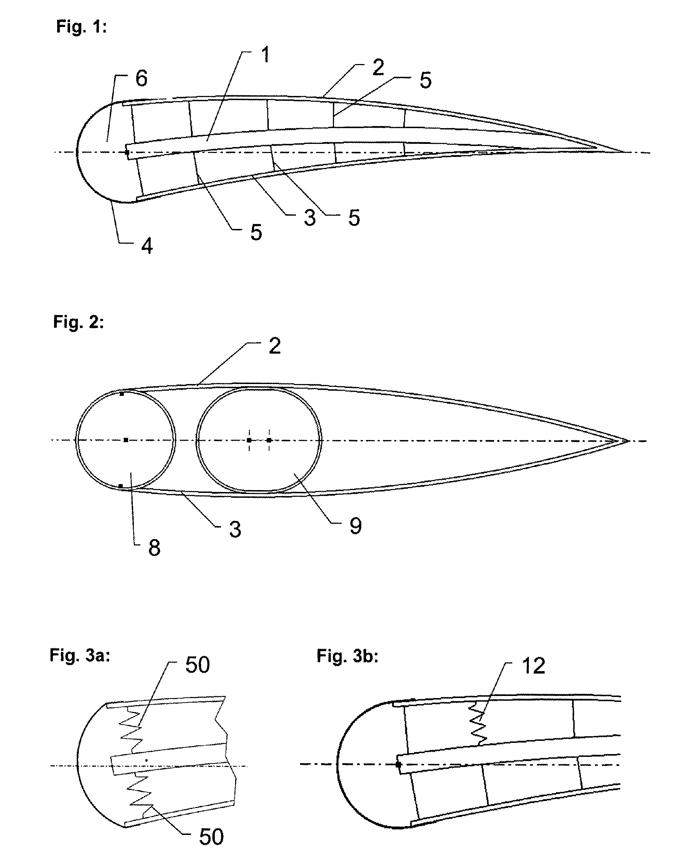

In einer beispielhaften Ausführungsform eines unsymmetrischen Profils erkennt man im Schnitt, Fig. 1, die tragende gewölbte Skelettplatte 1, die nicht zwangsweise der geometrischen Skelettlinie des Profils folgen muss, wenn hohe aerodynamische Belastungen eine stärkere Wölbung angeraten sein lassen. Stapelbarkeit und Packvolumen werden dadurch kaum beeinträchtigt. Je nach Blattgröße und Dimensionierung kann die tragende Skelettplatte 1 trapezförmig und/oder verwunden ausgebildet werden. Als Werkstoffe werden GFK und CFK bevorzugt, im Falle größerer Abmessungen auch doppelschichtig als Sandwichstruktur. Blattober- und -unterseite (d.h. Saug- und Druckseite des Profils) werden von den dünnwandigen biege- und torsionssteifen Begrenzungsplatten 2,3 gebildet. Diese sind mit einem Gewebetuch 4 verbunden, welches die Profilnase bildet und bei Innendruck die Form des Nasenradius annimmt. Alternativ kann das Tuch auch das gesamte Profil umhüllen, wenn für die biegesteifen Platten 2,3 ein zusätzlicher Wetterschutz benötigt wird.

Die Abstandshalter 5 sind in dieser Ausführung als zugfeste Fäden ausgebildet. Sie sind in etwa gleichmäßig über die Oberfläche der Skelettplatte 1 zu den Platten 2,3 der Ober- und Unterseite in der jeweils für die zu erzielende Form benötigten Länge verteilt. Sie werden an der Skelettplatte 1 befestigt, um dann z.B. durch Bohrungen in den Begrenzungsplatten 2, 3 gefädelt, hier befestigt zu werden. Diese Bohrungen müssen luftdicht verschlossen, ggf. auch durch das umhüllende Tuch abgedeckt werden. Die Abstandhalter können in einer weiteren Ausführung auch als Tuchstreifen ausgebildet sein, die in Blattlängsrichtung verlaufen (also rechtwinklig zur Zeichenebene).

Der gemäß Fig. 1 über das gesamte Blatt zusammenhängende Luftraum 6 wird mittels eines am Blatt angeordneten Ventils vor der Montage unter Druck gesetzt.

Symmetrische Profile, wie beispielhaft in Fig. 2 dargestellt, benötigen die tragende Skelettplatte nicht zwingend, um die gewünschte Profilform zu verwirklichen. Wenn die mechanische Steifigkeit mittels der Begrenzungsplatten 2 und 3, die pneumatische Steifigkeit unterstützend, erreicht wird, kann sich der innere Überdruck auf zwei Kammern 8 und 9 beschränken. Die Kammer 8, ein Schlauch konstanten oder längs des Blattes veränderlichen Querschnitts bildet die Blattnase und beide Kammern 8,9 spreizen die Begrenzungsplatten 2,3 in die durch deren Wölbung und den Durchmesser der Luftkammern 8,9 gegebene Profilform.

Konstruktive Varianten hinsichtlich einer pneumatischen Profilveränderung zeigen die Fig. 3a und 3b. Elastische Abstandshalter 50, z.B. Spiralfedern, im Nasenbereich bewirken schon bei einer kleinen Erhöhung des Innendrucks eine empfindliche, zum Strömungsabriss führende Profiländerung, Fig. 3a. Eine sanftere Regelung bei wechselnden Windgeschwindigkeiten und geändertem Leistungsbedarf ist mit einer Wölbungsänderung im Mittelbereich des Profils möglich, in dem dort ein elastischer Abstandhalter 12 angeordnet ist, Fig. 3b.

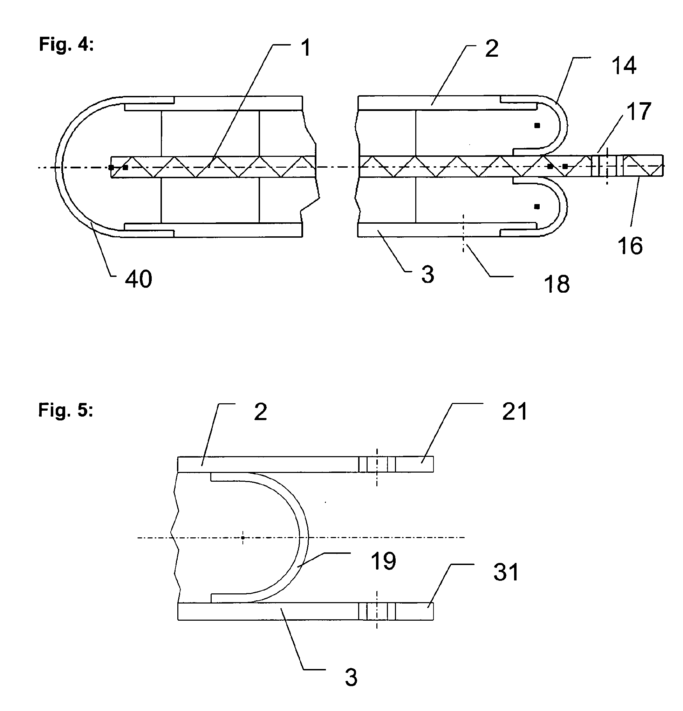

Die Blattspitze, der Randbogen, kann wie in Fig. 4 dargestellt aus Gewebetuch 40 gebildet werden, welches unter Innendruck eine widerstandsarme Form einnimmt. Auch eine starre, luftdicht eingefügte und entsprechend geformte Endplatte erfüllt den Zweck.

Auch an der Wurzel kann das Blatt durch Tuchabschnitte 14, 15 zwischen den Begrenzungsplatten 2, 3 und der Skelettplatte 1 abgeschlossen werden, wobei diese aus dem profilierten Blattbereich herausragt. Wird dieser Teil 16 der Platte 1 mit mehreren Bohrungen 17 versehen, wenn notwendig durch Buchsen verstärkt, kann so die form- und kraftschlüssige Verbindung zur hier nicht dargestellten Rotornabe erfolgen. Mit der Mittellinie 18 ist eine bevorzugte Position des Füllventils angedeutet.

Ein Blatt ohne tragende Mittelstruktur mit steifen Begrenzungsplatten 2 und 3, Fig. 5, kann an der Wurzel auch durch einen Tuchabschnitt 19 abgeschlossen werden, wobei die mit Bohrungen versehenen überstehenden Abschnitte 21 und 31 der Befestigung des Blattes an der Rotornabe dienen.

Eine Blattverstellung wäre konstruktiv möglich, widerspräche aber den Anforderungen der vorliegenden Einsatzbedingungen und eines niedrigen bis mittleren Leistungsbereiches.

Die Begrenzungsplatten können z.B. aus einer monolithischen Platte aus GFK oder CFK bestehen. Alternativ kann eine Begrenzungsplatte auch als Sandwichbauteil aus Kern sowie Grund- und Deckplatten gebildet sein, wobei die Grund- und Deckplatten aus GFK oder CFK bestehen und der Kern als Wabe oder Schaum ausgebildet ist.

Das Tuch kann z.B. als beschichtetes Fasergewebe ausgebildet sein.

Geeignete Fasern sind z.B.:
p-Aramid-Fasern (Markenname: KEVLAR)
Flüssigkristallfasern (Markenname: Vectran)
Hochfeste Polyethylenfaser (Markenname: Dyneema)

Geeignete Beschichtungen sind z.B.:
Polyurethan
Polyvinylchlorid (PVC),
Polytetrafluorethylen (PTFE)
Silikon.

## Patentansprüche

1. Rotorblatt für Windkraftanlagen, dessen äußere Form durch erhöhten Innendruck aufrechterhalten wird, **dadurch gekennzeichnet, dass** zumindest die Saug- und Druckseite des Rotorprofils durch biegesteife Begrenzungsplatten (2,3) gebildet ist.

2. Rotorblatt nach Anspruch 1, **dadurch gekennzeichnet, dass** der erhöhte Innendruck in einem oder mehren aufblasbaren Körper (8,9) im Innern des Rotorblatts vorhanden ist.

3. Rotorblatt nach Anspruch 1, **dadurch gekennzeichnet, dass** der erhöhte Innendruck im gesamten Innenraum des Rotorblatts vorhanden ist.

4. Rotorblatt nach Anspruch 3, **dadurch gekennzeichnet, dass** im Innenraum zur Formgebung uhd zur Aufnahme der aerodynamischen und mechanischen Kräfte eine Stützstruktur vorhanden ist.

5. Rotorblatt nach Anspruch 4, **dadurch gekennzeichnet, dass** die Stützstruktur eine Platte (1) umfasst, die über Abstandhalter (5,50,12) mit den Begrenzungsplatten (2,3) verbunden ist.

6. Rotorblatt nach Anspruch 5, **dadurch gekennzeichnet, dass** die Abstandshalter als zugfeste Fäden (5) oder Tuchstreifen (5) ausgebildet sind.

7. Rotorblatt nach Anspruch 5, **dadurch gekennzeichnet, dass** zumindest einer der Abstandshalter (12,50) aus einem elastischen Material gebildet ist, so dass dessen Länge mit Variation des Innendrucks gesteuert werden kann.

8. Rotorblatt nach einem der vorangehenden Ansprüche, **dadurch gekennzeichnet, dass** die Blattnase und/oder die Blattspitze aus einem Tuch (4,40) gebildet ist.

9. Rotorblatt nach einem der vorangehenden Ansprüche, **dadurch gekennzeichnet, dass** die Begrenzungsplatten (2,3) an der Blattwurzel aus den Profil des Rotorblatts hinausragen, wobei an den hinausragenden Bereichen der Begrenzungsplatten Einrichtungen (17) zur Befestigung des Rotorblatts an einer Rotornabe vorhanden sind.

10. Rotorblatt nach einem der vorangehenden Ansprüche, **dadurch gekennzeichnet, dass** die Platte (1) der Stützstruktur aus dem Profil des Rotorblatts hinausragt, wobei an den hinausragenden Bereichen der Begrenzungsplatte Einrichtungen zur Befestigung des Rotorblatts an einer Rotornabe vorhanden sind.
